Europäisches Patentamt

(19) European Patent Office

Office européen des brevets

(11) Publication number : **0 386 461 B1**

# EUROPEAN PATENT SPECIFICATION

(12)

(45) Date of publication of patent specification :
09.08.95 Bulletin 95/32

(51) Int. Cl.$^6$ : **G06F 11/00**

(21) Application number : **90102078.4**

(22) Date of filing : **02.02.90**

(54) **Fault tolerant computer memory system with disablement feature.**

(30) Priority : **10.03.89 US 321827**

(43) Date of publication of application :
**12.09.90 Bulletin 90/37**

(45) Publication of the grant of the patent :
**09.08.95 Bulletin 95/32**

(84) Designated Contracting States :
**BE CH DE FR GB IT LI NL SE**

(56) References cited :
**EP-A- 0 186 719**
**WO-A-83/01320**
**US-A- 4 030 067**
**US-A- 4 375 664**

(73) Proprietor : **International Business Machines Corporation**
**Old Orchard Road**
**Armonk, N.Y. 10504 (US)**

(72) Inventor : **Blake, Robert Martin**
**3 Central Avenue**
**Wappingers Falls, New York 12590 (US)**
Inventor : **Bossen, Douglas Craig**
**42 Cathy Road**
**Poughkeepsie, New York 12603 (US)**
Inventor : **Chen, Chin-Long**
**50 Pye Lane**
**Wappingers Falls, New York 12590 (US)**
Inventor : **Fifield, John Atkinson**
**RR1, Box 7490,**
**Pokerhill Road**
**Underhill, Vermont 05489 (US)**
Inventor : **Kalter, Howard Leo**
**14 Village Drive**
**Colchester, Vermont 05446 (US)**

(74) Representative : **Schäfer, Wolfgang, Dipl.-Ing.**
**IBM Deutschland Informationssysteme GmbH**
**Patentwesen und Urheberrecht**
**D-70548 Stuttgart (DE)**

## Description

The present invention is directed to a fault tolerant computer memory system according to the preamble of claim 1 and a method of claim 5.

As semiconductor memory chips are developed with smaller and smaller feature sizes and a corresponding increase in circuit packaging density, additional error correction methods, such as on-chip error correction, become more and more important. In general, memory errors occurring on a chip fall into two distinct categories: hard errors and soft errors. Soft errors are typically transient events, such as those induced by background level alpha particle radiation or caused by parametric process sensitivities that create "weak cells". Weak cells are those that fail upon application of unique voltages or data patterns, or are otherwise sensitive to noise, printed image size or image tracking. With increasing chip densities, soft errors become more frequent. Thus, increasing chip density dictates a greater need for on-chip error correction capabilities, especially for soft errors.

In addition to the occurrence of soft errors which can usually be corrected by error correction coding circuitry, there is also the possibility of hard errors. Hard errors often arise out of imperfect manufacturing conditions including device contamination. With increasing memory densities, perfection in chip manufacture is very difficult. Thus, hard errors may be present in addition to soft errors. Moreover, hard errors have the seemingly paradoxical benefit of generally being able to be repeated. It is however the reproducibility of such errors which provides a mechanism for their correction (see below). One of the common forms of hard error occurring in a memory system or chip is the occurrence of a "stuck at" fault in which one of the memory locations continually indicates a zero or one output response in one or more bit positions, irrespective of the specific contents of the memory cell.

Such a fault tolerant semiconductor memory system is disclosed in US-A 4,748,627 describing an error correction function used in conjunction with a refreshable memory but providing the ability to end the error correction function when data is to be read from cells that are questionable. Multi-level correction aspects and the role of hard errors do not appear to be considered.

The US-A 4,335,459, R. L. Miller titled "Single Chip Random Access Memory with Increased Yield and Reliability" appears to disclose a multi-chip memory system in which each chip includes its own on-chip error correction (see esp. column 12). However, there does not appear to be any appreciation of the need to effectively turn off on-chip error correction to correct hard errors so as to be able to make the use of the complement/recomplement algorithm, or of the desirability of doing so in terms of overall memory reliability.

The article "Cost Analysis of On-Chip Error Control Coding for Fault Tolerant Dynamic RAMs" by N. Jarwala and D. K. Pradhan, pp. 278-283, published in IEEE Computer Society Press, Computer Society Order No. 778, in July 1987, appears to disclose a cost analysis for two different error correcting codes that may be employed on-chip in high density DRAMs. Multi-level coding schemes do not appear to be mentioned.

While there are many different error correction codes that are applicable and available for use in conjunction with memory systems, one of the most popular class of codes that have been employed for this purpose are codes with a minimum distance of four between code words. Such codes are capable of single error correction and double error detection. These codes are well known and easily implemented and have a proven track record of reliability and ease of manufacture, particularly in terms of simplified circuitry and minimum consumption of chip "real estate". Clearly, single errors, whether hard or soft in nature, pose no problem for such codes. In addition, such codes can detect the presence of double errors, of either the hard or soft variety, but cannot generally correct them. In the event of two soft errors, it does not appear that correction is generally possible using such codes and decoding techniques. However, the presence of two hard errors or one hard and one soft error, does lend itself to the utilization of the complement/recomplement algorithm for double error correction. This algorithm is also referred to as the double complement algorithm. This method is, for example, described in an article by C. L. Chen and M. Y. Hsiao, "Error-Correcting Codes for Semiconductor Memory Applications, a State-of-the-Art Review", IBM Journal of Research and Development, pp. 124-134, March 1984. This algorithm takes advantage of the fact that hard errors are in general reproducible. As a result of this it is possible to be able to identify bit positions which are in error. With this knowledge, double error correction can in fact be carried out. It is thus seen that the reproducibility of hard errors renders it possible to improve the reliability of information storage systems which are subject to hard-hard errors or hard-soft errors without increasing code word length. Thus, aspects of memory chip design which tend to defeat hard error reproducibility also present barriers to system level double error correction especially in systems which are designed around existing single error correction and double error detection codes and circuitry.

Memory architecture itself also plays a role in error correction considerations. In particular, it is often desirable to access a double word (64 bits) of memory data wherein each bit of the double word is supplied from a separate memory chip. This memory architecture is useful in that it can provide reliability and speed advantages. Error correction coding methods are also applied to the double word of data. This is referred to herein as system level error correction (and detection). It is at this level that the complement/recomplement algorithm is employed to correct hard-hard and hard-soft errors, that is, double errors which are of a hard variety. In particular, this means that a certain number of memory chips are solely devoted to the storage of redundant coding information, typically of the parity or check sum variety.

Accordingly, it is seen that it is desirable to construct memory systems which employ on-chip error correction and detection capabilities as a result of high circuit packaging densities. SEC/DED codes are limited to correction of only 1 bit of their data words. For this reason, it is necessary to prevent any and all bit correction upon detection of a multiple error. With data correction inhibited, multiple errors cannot cause the SEC/DED system to erroneously alter a good data bit. The multiple error condition is then cleared during "write back" (i.e., the operation of transferring the on-chip ECC word with its appropriate check bits back into the DRAM cells) through the on-chip ECC system as valid checkbits are generated from the unaltered data word. In this system, damage to the data word integrity is limited to the original multiple errors. Although these errors can no longer be detected, the ECC system cannot cause degeneration of data word during subsequent accesses.

The result of using this method is that all errors at the chip level appear soft. Detection of bad memory cells in manufacturing test is effectively done with pattern testing by comparing expect data with the entire ECC word. The bits in error are easily noted and the quality of hardware under test is easily evaluated. But in actual memory system operations, the total ECC word is not read out of the memory chip. Moreover, the number of bits that are typically read out is small. This greatly increases the probability of missing the bits in error, after a multiple error in the chip data word has occurred. Such uncorrectable errors at the system level tend to cause major system failures. Upon occurrence of such an error, subsequent memory operations generally cease. At the same time, it is also seen that it is desirable to employ system level error correction and detection circuitry to increase memory reliability. It is this situation which produces the problem which is solved by the present invention. In particular, at the system level it is desirable to be able to employ the complement/recomplement algorithm to increase overall memory system reliability particularly through correction of double errors which would not otherwise be corrected. However, the complement/recomplement algorithm depends upon the ability to be able to reproduce hard errors. However, it is noted that the on-chip error correction capability can actually mask the presence of hard errors associated with a given chip.

Accordingly, it is the object of the present invention to solve the antagonism that can exist between chip level and system level error correction systems in fault tolerant memory systems.

It is a still further object of the present invention to provide semiconductor memory chip designs which facilitate the reproducibility of certain chip level errors, to facilitate the detection and correction of hard-hard and hard-soft memory system errors, and to enable memory systems to apply the double complement procedure known per se to recover data when there is an uncorrectable error in the system level error correction coding circuitry.

The solution is described in the characterizing parts of claim 1 for the system and of claim 5 for the method.

In accordance with a preferred embodiment of the present invention, a fault tolerant computer memory system comprises a plurality of individual memory units. Each memory unit contains a plurality of memory cells and unit level error correction and detection means. Also present are a plurality of unit level means for indicating the presence of uncorrectable errors, these means being associated with distinct ones of the memory units. The uncorrectable error indication means operates to disable the unit level error correction function upon receiving an uncorrectable error detection signal from at least one associated chip level error correction circuit. The memory units are preferably linked together through a system level register which receives data from individual memory units. The memory system also preferably includes system level detection and correction means which receives data from the system level register. In preferred embodiments of the present invention the memory units are best thought of as being individual semiconductor memory chips with on-chip error detection and correction means. Additionally, each chip is best perceived as supplying a single bit (at one time) of information to a system level word-size register which is also provided with system level error correction and detection capability.

One of the effects of the operation of the present invention is the carrying out of an effective temporary "chip kill" upon the occurrence of an uncorrectable error associated with a given chip. In effect, the occurrence of such an error on a chip causes the unit level error correction function to be disabled, for example, by providing an all zero syndrome so that the double complement algorithm, known per se, can be carried out at the system level. While this is almost certain to generate subsequent system level error indications, the reproducible nature of the forced chip error still renders it possible for system level error detection and correction circuitry to perform complement/recomplement correction. In spite of the fact that the present invention disables unit level error correction in one of the memory units, nonetheless overall memory system reliability is enhanced because of the reproducible nature of the forced errors that result. Accordingly, the highly counter-intuitive result is that overall memory reliability is enhanced even though an error correction component is effectively disabled.

The subject matter which is regarded as the invention is particularly pointed out and distinctly claimed in the concluding portion of the specification. The invention, however, both as to organization and method of practice, together with further objects and advantages thereof, may best be understood by reference to the following description taken in connection with the accompanying drawings in which:

Fig. 1    is a partially schematic block diagram illustrating a memory organization which is particularly suitable for implementation of dual level error correction;

Fig. 2    is a partial block diagram similar to Fig. 1 but which particularly illustrates modifications made to provide unit level correction disablement means disposed on the individual memory units (chips).

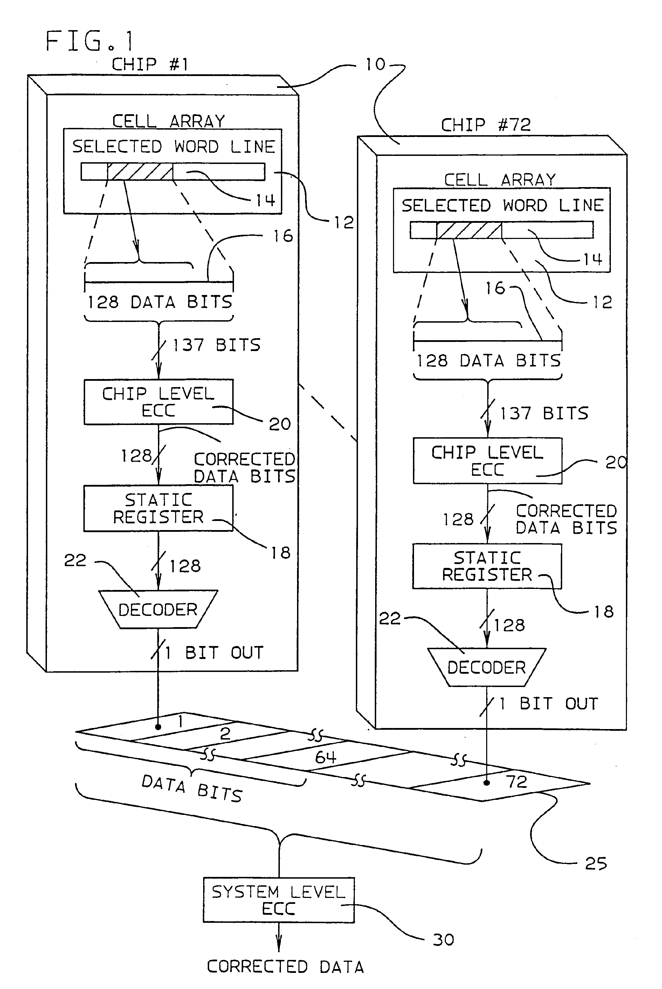

Fig. 1 illustrates a memory organization which is particularly suitable for the employment of the present invention. In particular, Fig. 1 illustrates a computer memory organization comprising a plurality of 72 individual memory chips 10. However, it should be appreciated that the present invention is not limited to semiconductor memories but is generally applicable to any computer memory system in which a plurality of memory units each provide single or multiple output bits to a register and in which both unit level and system level error correction circuitry is employed. In the system shown in Fig. 1, each of the 72 memory units 10 supplies a single bit to system level or W-register 25. Register 25 is also seen to supply output data through system level error correction circuitry 30. Furthermore, it is also seen that chip or unit level error correcting circuitry 20 is provided on each of the memory units or chips 10.

In the particular embodiment shown in Fig. 1, it is seen that cell array 12 is organized in words of 137 bits occurring in selected word line 14. Of these 137 bits, 128 bits comprise data bits with the remaining 9 bits being parity check bits. This is sufficient to provide on-chip single error correction and double error detection. The 137 bits of cell array information 16 are selected from word line 14 and passed on to chip level error correction circuitry 20 which provides 128 bits of corrected data to static register 18. Memory unit 10 is also supplied with address field information (not shown) which is employed by decoder 22 to select a single output bit from static register 18. The output of decoders 22 in chips 1 through 72 are supplied to corresponding cells in register 25. These cells typically comprise flip-flop circuit elements. In particular, it is seen that system level register 25 includes 72 bits of information of which 64 bits comprise data with 8 bits comprising parity check information. Again, single error correction and double error detection are possible with this degree of redundancy. The specific nature of the code or of the detection and correction circuitry employed either at the unit level or at the system level are substantially irrelevant to the practice of the invention. Any suitable code may be employed for this purpose.

The disadvantage of the system shown in Fig. 1 is that hard errors such as "stuck at" faults occurring in a particular cell array 12 render it impossible for system level error correction coding methods to employ the complement/recomplement method for recovering from hard-hard and hard-soft errors (that is, double errors which are hard in nature). It is further noted that the specific structure of the memory system shown in Fig. 1 should not be construed as limiting the present invention. In particular, the choice of codes, as indicated above, is relatively arbitrary, as is the number of chips employed and the particular word organization of cell arrays 12. The relevant aspects of Fig. 1 encompass the dual level error correction capabilities and the independent organization of the memory units, particularly with respect to their supplying independent bits of information to register 25.

In order to more fully comprehend the problem associated with the memory system of Fig. 1, consideration is now directed to a simplified example of the problems that certain hard errors such as "stuck at" faults can engender. In particular, consideration is given to a memory structure in which each word comprises 8 bits, the first 4 bits being data bits and the last 4 bits being parity sum check bits. In particular, and solely for the purposes of explanation, it is assumed that the error correcting code matrix is the one provided in the table below:

| 1 | 0 | 1 | 1 | 1 | 0 | 0 | 0 |
| 1 | 1 | 0 | 1 | 0 | 1 | 0 | 0 |
| 1 | 1 | 1 | 0 | 0 | 0 | 1 | 0 |
| 0 | 1 | 1 | 1 | 0 | 0 | 0 | 1 |

TABLE I

It is also assumed that there are present two "stuck at" faults occurring in the first two output bit positions of the memory array being described. If four bits of data 0000 are written into the memory, the word written into the array is 00000000 in accordance with the matrix provided above. However, the data read out of the memory is 1100 indicating an error pattern of 1100 because of the two "stuck at" faults. However, if the data 0100 is desired to be stored in the memory array, the word written into the array is 01000111 in accordance with the parity check matrix implied by the matrix given above. However, again because of the two "stuck at" faults in the first two output bit positions the word read out of the array is 11000111. However, because of the unit level error correction capabilities, the data read out of the memory is indicated as 0100 clearly implying an error pattern of 0000 since this is the same pattern written into the memory. Thus it is seen that, depending upon the data written into the memory, the existence of "stuck at" faults can be masked. It is in fact the masking of these faults which would normally prohibit application of the complement/recomplement algorithm for correcting hard-hard errors. The situation above is summarized in the table below:

| STUCK AT FAULTS | 1 | 1 |   |   |   |   |   |   |
|-----------------|---|---|---|---|---|---|---|---|
| WRITE DATA      | 0 | 0 | 0 | 0 |   |   |   |   |
| WRITE WORD      | 0 | 0 | 0 | 0 | 0 | 0 | 0 | 0 |
| READ DATA       | 1 | 1 | 0 | 0 |   |   |   |   |
| ERROR           | 1 | 1 | 0 | 0 |   |   |   |   |
|                 |   |   |   |   |   |   |   |   |
| WRITE DATA      | 0 | 1 | 0 | 0 |   |   |   |   |
| WRITE WORD      | 0 | 1 | 0 | 0 | 0 | 1 | 1 | 1 |
| READ WORD       | 1 | 1 | 0 | 0 | 0 | 1 | 1 | 1 |
| READ DATA       | 0 | 1 | 0 | 0 |   |   |   |   |
| ERROR           | 0 | 0 | 0 | 0 |   |   |   |   |

TABLE II

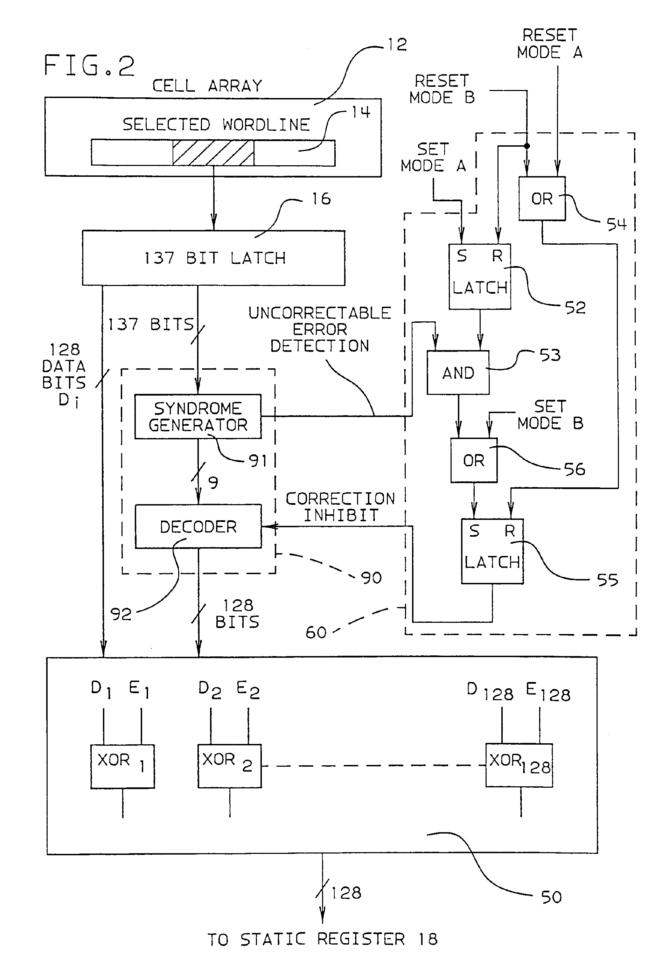

Attention is now specifically directed to Fig. 2 in which memory units 10 have been modified as indicated in accordance with the present invention. In particular, it is seen that in Fig. 2 unit or chip level error correction circuit 90 is employed to provide an uncorrectable error detection signal from syndrome generator 91 through AND-gate 53 and OR-gate 56 to latch 55, which provides a correction inhibit signal to decoder 92 of chip level ECC circuit 90. The chip is first initialized to have correct data and parity bits in all the ECC words "behind" the on-chip ECC. Upon completion of the initialization, the SET MODE A signal line is used to set latch 52 such that the uncorrectable error detection signal from syndrome generator 91 can set latch 55 through AND-gate 53 and OR-gate 56 to disable unit level error correction.

The SET MODE A signal line is employed in accordance with standard known methods such as applying an over voltage for an existing input or inputs or in accordance with newly defined JEDEC standard in which CE and W are active before RE and in which addresses at RE are decoded to provide the SET MODE A input signal. The reset input R of latch 55 is supplied in generally the same fashion as discussed earlier for the SET MODE A input. The RESET MODE A signal line resets only latch 55 allowing normal operation to return after system error recovery is accomplished and data can be read from the array until another multiple error is encountered. RESET MODE B, again supplied by method given above, is used to disable the feature of data correction by inhibition. SET MODE B again is supplied by techniques previously discussed and is used to set latch 55 through OR-gate 56 to allow memory bit mapping by inhibiting chip level ECC data correction.

The use of RESET MODES A or B or SET MODE B is used in conjunction with system error recovery to allow the data from the bad area "behind" the on-chip ECC to be mapped and corrected and placed into another array with the use of normal chip sparing methods. SET MODE B is used for system diagnostics by inhibiting on-chip ECC error correction so as to allow memory bit mapping of bad data locations. The circuitry shown within block 60 represents additional circuits employed on-chip to carry out the present invention.

Accordingly, it is seen that the data from array chip 12 is supplied to register 16 which is capable, in the example shown, of storing 137 bits of information. These 132 bits include 128 data bits $D_i$ (i = 1, 2, ..., 128) and nine error correction check bits. Register 16 supplies data bits $D_i$ directly to error corrector 50. Additionally, register 16 also supplies all 137 bits from cell array 12 to syndrome generator 91. Syndrome generator 91 and decoder 92 operate to generate a corrector which is entirely zero in the event that no errors occur. Furthermore,

5

in the case that errors do occur, syndrome generator 91 and decoder 92 operate to supply a binary output vector having bits turned on in the positions in which it is desirable to correct errors. The binary output vector from decoder 92, indicating error positions, is generated from the syndrome vector in ways that are well known to error correction code practitioners. Thus in its normal mode of operation, when a single error is detected the output generated by syndrome generator 91 and decoder 92 represents a vector having 128 positions one of which is a binary 1 in the position in which the single error has occurred. This permits the vector output from decoder 92 to be Exclusive-ORed with data bits Di from register 16. For example, if there is an error indicated in bit position 57 then data bit D57 is Exclusive-ORed with bit position E57 from block 90. This Exclusive-OR operation is carried out in Exclusive-OR block XOR57, as suggested in Fig. 2. Thus, the Exclusive-OR blocks in error corrector 50 operate as conditional inverters causing a correction upon the condition that an error has been found in a specific bit.

However, in the present invention syndrome generator 91 provides an uncorrectable error detect signal to AND-gate 53 and decoder 92 can receive back a correction inhibit signal from latch 55, which forces the input syndrome to the decoder 92 to be set to all zeroes, irrespective of the presence or absence of error indications in the decoding process. This effects a disablement of the chip level error correction coding circuitry. When the syndrome is set to all zeroes, the Exclusive-OR operation carried out by error corrector 50 leaves data bits Di intact. Alternatively, correction inhibit signals can operate directly on the output from decoder 92 to provide a set of zero corrector bits E1 to corrector 50.

In preferred embodiments of the present invention, the signal to set the syndrome to an all zero value is derived from on-chip control logic 60. In this way, on-chip means are provided for disabling the on-chip error correction circuitry. The disablement of the on-chip error correcting circuitry actually enables the double complement algorithm to be carried out at the system level and furthermore allows diagnostic mapping of the memory to be done. This functionality is very desirable during memory test operations when it is desirable to be able to determine the presence of faulty memory locations.

More importantly, this provides the ability to reproduce hard errors, a property which is necessary for the proper operation of the complement/recomplement method employed for error correction of hard-hard errors at the system level. In this way, when the memory unit modifications shown in Fig. 2 is employed in a fault tolerant memory system, greater system reliability is achievable. Without the memory unit modification, whenever there is a double error at the system level, the data is not recoverable. With the memory unit modification, all hard-hard and hard-soft errors at the system level are correctable.

From the above, it should be appreciated that the present invention provides a mechanism for enhanced fault tolerant capabilities in memory systems, particularly high density semiconductor memories comprising a plurality of integrated circuit chips. More particularly, it is seen that the present applicants have provided a counter-intuitive approach in which chip level memory system error correction functioning is disabled in order to improve overall system level error correction capabilities. Thus, applicants have employed the seemingly paradoxical approach of forcing errors to improve error correction capabilities. It is therefore seen that applicants have contributed to significant advances in the areas of memory architecture and error correction. It is further seen that applicants have done so at minimal cost and with a design which is applicable to any memory chip employing on-chip error correction capabilities.

While the invention has been described in detail herein in accord with certain preferred embodiments thereof, many modifications and changes therein may be effected by those skilled in the art. Accordingly, it is intended by the appended claims to cover all such modifications and changes as fall within the scope of the invention.

## Claims

1. A fault tolerant semiconductor memory system with a plurality of digital memory units which receives address information and which supplies data information in response thereto, comprising

   a plurality of on-chip unit level error detection and correction means (20), said means being associated with distinct ones of said memory units, for detecting and correcting errors in data read from memory cells within said memory units;
   characterized
   by a plurality of unit level disablement means (Fig.2 (60, 90)), associated with distinct ones of said memory units and operating to disable the operation of at least one associated unit level error detection and correction means upon receiving an uncorrectable error detection signal from said at least one associated chip level error correction circuit; and
   by system level error detection and correction means (30) receiving data from said memory units said system level detection and correction means being operable to correct hard errors by activation of said disablement means, in that the double complement algorithm, known per se, can be carried out at the system level.

2. Memory system of claim 1,
characterized
by mode switching means (52, 55) operable to control the activator of said disablement means.

3. Memory system as set forth in claim 1,
characterized
by system level error detection and correction means receiving data from a plurality of said memory units and being operable to correct hard errors by activation of said unit level disabling means in that the double complement algorithm, known per se, can be carried out at the system level.

4. Memory system as set forth in claim 1 or 3,
characterized
by error detection and correction means for two distinct ones of levels the lower one at the unit level, the other one at the system level, said lower one of said levels being capable of exhibiting both hard and soft errors; and
by means for disabling the operation of said lower level one of said error detection and correction means upon the occurrence of multiple errors in said unit level memory chips.

5. Method for operating the memory system of claim 1 or 4, characterized
by a step of disabling the operation of said lower or unit level of said error detection and correction means upon the occurrence of multiple errors in said unit level memory chips.


**Patentansprüche**

1. Fehlertolerantes Halbleiterspeichersystem mit einer Mehrzahl von digitalen Speichereinheiten, das Adreßinformationen empfängt und als Antwort hierauf Dateninformationen bereitstellt, das folgendes umfaßt
eine Mehrzahl von chipintegrierten Mitteln zur Fehlererkennung und -korrektur auf Speichereinheitenebene (20), wobei diese Mittel bestimmten Speichereinheiten zugeordnet sind, die zur Erkennung und Korrektur von Fehlern in Daten verwendet werden, die aus Speicherzellen in den Speichereinheiten gelesen werden;
gekennzeichnet durch
eine Mehrzahl von Deaktivierungsmitteln auf Speichereinheitenebene (Fig. 2 (60, 90)), die bestimmten Speichereinheiten zugeordnet sind, und die die Operation von mindestens einem zugeordneten Mittel für die Fehlererkennung und -korrektur deaktivieren, wenn ein Signal für die Erkennung eines nicht korrigierbaren Fehlers von mindestens einem Fehlerkorrekturschaltkreis auf Chipebene empfangen wird; und
Mittel für die Fehlererkennung und -korrektur auf Systemebene (30), die Daten von den Speichereinheiten empfangen, wobei die Mitel für die Fehlererkennung und -korrektur Fehler auf Maschinenebene durch Aktivierung der Deaktivierungsmittel korrigieren können, in dem der hinreichend bekannte Doppelkomplementalgorithmus auf Systemebene ausgeführt werden kann.

2. Das Speichersystem aus Anspruch 1,
gekennzeichnet durch
Moduswechselmittel (52, 55), die die Aktivierungseinheit der Deaktivierungsmittel steuern.

3. Speichersystem nach Anspruch 1,
gekennzeichnet durch
Fehlererkennungsmittel und -korrekturmittel auf Systemebene, die Daten von einer Mehrzahl von Speichereinheiten empfangen und Fehler auf Maschinenebene durch die Aktivierung der Deaktivierungsmittel auf Systemebene korrigieren können, in dem der hinreichend bekannte Doppelkomplementalgorithmus auf Systemebene ausgeführt werden kann.

4. Speichersystem nach Anspruch 1 oder 3,

gekennzeichnet durch

Fehlererkennungsmittel und -korrekturmittel für zwei verschiedene Ebenen, wobei die niedrigere die Speichereinheitenebene und die andere die Systemebene ist und wobei die niedrigere Ebene sowohl Hardware- als auch Fehler durch Alphateilchen aufweisen kann; und

Mittel für die Deaktivierung des Mittels für die Fehlererkennung und -korrektur auf der niedrigeren Ebene, wenn Mehrfachfehler in den Speicherchips auf Speichereinheitenebene auftreten.

5. Verfahren für den Betrieb des Speichersystems aus Anspruch 1 oder 4, gekennzeichnet durch

einen Schritt, bei dem das Mittel für die Fehlererkennung und -korrektur auf der niedrigeren oder Speichereinheitenebene deaktiviert wird, wenn Mehrfachfehler in den Speicherchips auf Speichereinheitenebene auftreten.

**Revendications**

1. Système de mémoire à semi-conducteurs tolérant les défauts, ayant un ensemble d'unités de mémoires numériques recevant des informations d'adresse et fournissant des informations de données en réponse à celles-ci, comprenant

un ensemble de moyens de détection et de correction d'erreurs, au niveau unité, sur puce (20), lesdits moyens étant associés à des unités distinctes parmi lesdites unités de mémoires pour détecter et corriger des erreurs dans les données lues dans les cellules desdites unités de mémoires;

caractérisé

par un ensemble de moyens de neutralisation au niveau de l'unité (Fig.2 (60, 90)), associés à certaines desdites unités de mémoire distinctes et opérant de façon à neutraliser le fonctionnement d'au moins un des moyens de détection et de correction d'erreur associé au niveau de l'unité en recevant un signal de détection d'erreur non correctible dudit circuit de correction d'erreur au niveau de la puce associée; et

des moyens de détection et de correction d'erreurs au niveau système (30) recevant des données desdites unités de mémoires, lesdits moyens de détection et de correction d'erreurs au niveau système pouvant fonctionner de manière à corriger des erreurs matérielles par mise en fonction desdits moyens de neutralisation, en ce que l'algorithme de double complément connu en soi, peut être mis en oeuvre au niveau système.

2. Système de mémoire selon la revendication 1,

caractérisé

par des moyens de commutation de mode (52, 55) pouvant être mis en fonction pour contrôler l'activation desdits moyens de neutralisation.

3. Système de mémoire selon la revendication 1,

caractérisé

par des moyens de détection et de correction d'erreurs au niveau système recevant des données d'un ensemble desdites unités de mémoires et pouvant fonctionner de manière à corriger des erreurs matérielles en activant lesdits moyens de neutralisation au niveau unité de façon que l'algorithme double complément connu en soi puisse être mis en oeuvre au niveau système.

4. Système de mémoire selon la revendication 1 ou 3,

caractérisé

par des moyens de détection et de correction d'erreur de deux niveaux distincts le plus bas se situant au niveau unité, l'autre agissant au niveau système, ledit niveau le plus bas pouvant inclure à la fois des erreurs matérielles et logicielles; et

par des moyens de neutralisation du fonctionnement desdits moyens de détection et de correction d'erreurs dudit niveau inférieur lors de l'apparition d'erreurs multiples dans lesdites puces de mémoire au niveau unité.

5. Procédé de fonctionnement d'un système de mémoire selon la revendication 1 ou 4, caractérisé

par une étape de neutralisation du fonctionnement desdits moyens de détection et de correction d'erreur dudit niveau unité ou inférieur lors de l'apparition d'erreurs multiples dans lesdites puces de mémoire au niveau unité.

# FIG.1

CHIP #1

CELL ARRAY

SELECTED WORD LINE

14

12

10

16

128 DATA BITS

137 BITS

CHIP LEVEL
ECC

20

128

CORRECTED
DATA BITS

STATIC
REGISTER

18

22

128

DECODER

1 BIT OUT

CHIP #72

CELL ARRAY

SELECTED WORD LINE

14

16

12

128 DATA BITS

137 BITS

CHIP LEVEL
ECC

20

128

CORRECTED
DATA BITS

STATIC
REGISTER

18

22

128

DECODER

1 BIT OUT

1    2    64    72

DATA BITS

25

SYSTEM LEVEL
ECC

30

CORRECTED DATA

FIG.2